# EUROPÄISCHE PATENTSCHRIFT

(11) **EP 0 477 312 B1**
(45) Veröffentlichungstag und Bekanntmachung des Hinweises auf die Patenterteilung: **13.11.1996**
(21) Anmeldenummer: 91906043.4
(22) Anmeldetag: 26.03.1991
(51) Int. Cl.: G01F 1/68

(54) **VERFAHREN UND ANORDNUNG ZUM MESSEN VON STRÖMENDEN LUFTMENGEN**
PROCESS AND DEVICE FOR MEASURING AIR FLOW
PROCEDE ET AGENCEMENT POUR MESURER L'ECOULEMENT DE QUANTITES D'AIR

(30) Priorität: 14.04.1990 DE 4012081
(43) Veröffentlichungstag der Anmeldung: 01.04.1992
(73) Patentinhaber: ROBERT BOSCH GMBH, 70442 Stuttgart (DE)
(72) Erfinder: HECHT, Hans, D-7015 Korntal (DE); MAST, Martin, D-7016 Gerlingen (DE)
(86) Internationale Anmeldenummer: DE9100268
(87) Internationale Veröffentlichungsnummer: WO9116605

(56) Entgegenhaltungen:
- WO-A-89/03512
- WO-A-89/05967
- DE-A- 2 856 289
- DE-A- 3 518 409
- DE-A- 3 829 194
- DE-A- 3 841 057

## Beschreibung

### Stand der Technik

Die Erfindung betrifft eine Vorrichtung und ein Verfahren zur Messung von Luftmengen, beispielsweise in Ansaugrohren von Kraftfahrzeugen. Eine derartige Anordnung ist beispielsweise aus der DE-A 38 29 194 bekannt, welche eine Einrichtung zur Messung einer strömenden Luftmenge zeigt. Diese Einrichtung enthält einerseits einen Sensorwiderstand, welcher unmittelbar von der anströmenden Luft in seinem Temperaturgang beeinflußt wird sowie ein weiteres, in thermischem Kontakt miteinander stehendes Widerstandspara, von dem ein Widerstand beheizbar ist, wobei die notwendige Heizleistung ein Korrektursignal in einer Brückenschaltung liefert. Die Anordnung ist auf einer blasenförmig ausgebildeten Glaskeramik angeordnet, welche sich beim Ausbrennen eine Kohleschicht bildet.

Aus der DE-A 28 56 289 sind ein Verfahren und eine Vorrichtung zur thermischen Massenstrommessung bekannt, wobei der Massestrom durch einen Hohlkörper unter Messung der Ein- und Austrittstemperatur geleitet wird. Zur Erhöhung der Meßgenauigkeit wird zusätzlich der durch die Körperwandung an die Umgebung abgegebene Wärmefluß gemessen und der Massenstrom mit den so gewonnenen Daten aus der Wärmebilanzgleichung ermittelt. Hierzu sind an der Außenseite des Rohres zwei konzentrische, elektrisch isolierte Wicklungen aus thermischem Widerstandsdraht aufgewickelt, welche durch eine thermisch mäßig leitende Schicht von definierter Dicke voneinander getrennt sind. Hierdurch kann die zur Außenseite des Rohres abfließende Wärme erfaßt werden.

Zur Motorsteuerung ist es heute üblich, in Ansaugrohren von Kraftfahrzeugen Messungen der angesaugten Luftmengen durchzuführen. Dabei muß die Ansprechgeschwindigkeit thermischer Luftmengenmesser im Bereich von Millisekunden liegen. Hierzu dienen sogenannte Heißfilm-Luftmengemesser, bei denen auf einem entsprechenden Substrat ein in der Regel kombinierter Heiz- und/oder Meßwiderstand angeordnet ist. Die Abschätzung der thermischen Zeitkonstanten eines derartigen Luftmengenmessers ergab jedoch zu lange thermische Zeitkonstanten. Als Störgröße tritt hier insbesondere die an das Substrat selbst abgegebene Wärmeleistung auf. Bei einer Realisierung eines solchen bekannten Heißfilm-Luftmengenmesser, z. B. durch einen entsprechenden Dickschichtaufbau, hängt die Temperaturverteilung und der Wärmefluß in das Substrat von mehreren Faktoren, insbesondere von der Strömungsgeschwindigkeit der zu messenden Luftmenge und der eigenen Temperatur des Substrats ab. Dabei verändert sich die zu ermittelnde Temperatur mit zu langsamen Zeitkonstanten, was wiedrum ein zu langsames Einschwingen des Meßsignals zur Folge hat. Entsprechende Gegenmaßnahmen, wie beispielsweise eine bessere Isolierung der geheizten Schicht vom Substrat, sind nur begrenzt durchführbar.

### Vorteile der Erfindung

Bei der erfindungsgemäßen Vorrichtung gemäß Anspruch 1 und dem erfindungsgemäßen Verfahren gemäß Anspruch 4 wird dagegen der Sensor durch wärmeisolierende Maßnahmen vom Substrat getrennt und die Wärmeströme um den Sensor ermittelt und/oder beeinflußt und zur Korrektur des Sensorsignales benutzt. Hierbei kann eine Ermittlung der lateralen Wärmeströme neben dem Sensor mit einer Ermittlung des vertikalen Wärmestroms unterhalb des Sensors gekoppelt werden. Sowohl die Ermittlung des lateralen Wärmestroms neben dem Sensor als auch die Ermittlung des vertikalen Wärmestroms unterhalb des Sensors geschieht durch entsprechende Meßaufnehmer, z. B. Meßwiderstände, wobei der Meßwiderstand für den vertikalen Wärmestrom der Einfachheit halber die Substrattemperatur ermittelt. Stattdessen kann auch der laterale Wärmestrom und/oder der vertikale Wärmestrom durch Aufheizen beeinflußt werden. Dies geschieht bevorzugt durch entsprechende Schutzheizflächen neben oder unterhalb des Sensors, wobei die Schutzheizflächen auch mit den entsprechenden Meßwiderständen gekoppelt sein können. In diesem Fall handelt es sich dann um Meß- und/oder Heizwiderstände.

Das Aufheizen des Bereichs neben dem Sensor erfolgt auf eine konstante Differenz zur Sensortemperatur, was als sogenanntes laterales Guardprinzip bezeichnet wird. Desgleichen erfolgt auch eine Aufheizung der Substratoberfläche unterhalb des Sensors auf eine Temperatur, welche eine konstante Differenz zu der des Sensors aufweist. Dies wird als vertikales Guardprinzip bezeichnet.

Aus der Messung der vertikalen bzw. lateralen Wärmeströme ist es möglich, Signale zu gewinnen, die als Korrekturen zum Signal des Sensors benutzt werden können. Dieser Sensor arbeitet bevorzugt nach dem sogenannten CTA-Verfahren (Konstanttemperaturanaemometer). Die Signale dienen dann als direktes Maß für die Fehler dieses Verfahrens. Die entsprechende Korrektur erfolgt über eine ausgewählte elektronische Schaltung.

Durch die Temperaturbeeinflussung der lateralen und vertikalen Wärmeströme werden diese konstant gehalten und somit für die Durchführung des Meßverfahrens unwirksam gemacht.

Bei der Ermittlung der Wärmeströme um den Sensor ist kein zusätzlicher Leistungsbedarf notwendig und somit der Aufwand für eine zusätzliche Schaltung relativ gering. Es werden aber sehr günstig diejenigen Größen, nämlich die lateralen und vertikalen Wärmeströme erfaßt, die als Störgrößen für die Signale des Sensors auftreten können. Auch bei den beiden aktiven Schutzheizverfahren wird nur ein geringer zusätzlicher Leistungsbedarf auftreten, wenn dort tiefere Temperaturen für die Schutzheizflächen als für den Sensor durch Regelung eingestellt werden. Durch die Korrekturverfahren ist es möglich, eine genügend schnelle Messung duchzuführen und die Korrekturanordnung auf einem standardmäßigen Dickschichtsubstrat zusammen mit der nötigen Schaltung aufzubauen.

### Zeichnung

Weitere Einzelheiten der Erfindung ergeben sich aus der nachfolgenden Beschreibung bevorzugter Ausführungsbeispiele sowie anhand der Zeichnungen; diese zeigen in
- Figur 1: einen stark vergrößert dargestellten Längsschnitt durch einen erfindungsgemäßen Heißfilm-Luftmengenmesser;
- Figur 2: einen stark vergrößerten Längsschnitt durch ein weiteres Ausführungsbeispiels eines Heißfilm-Luftmengenmessers.

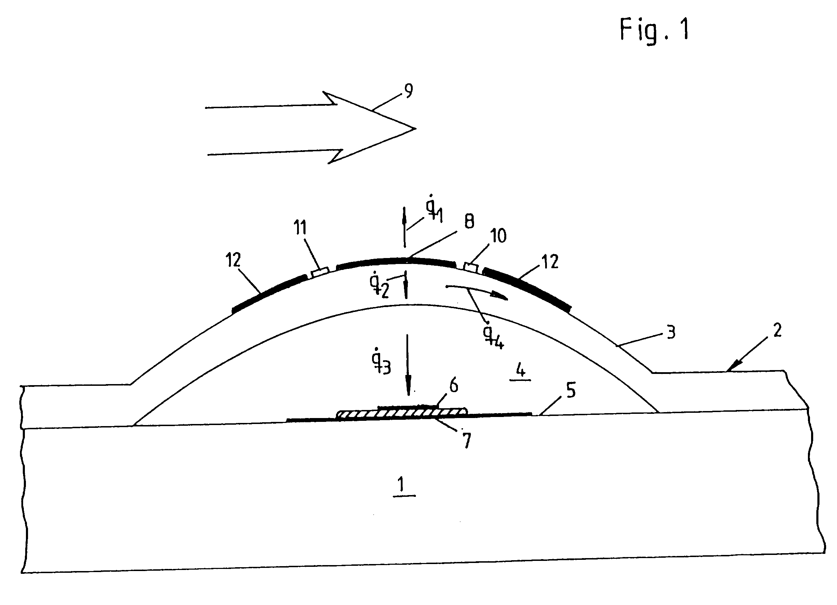

Bei einem Heißfilm-Luftmengenmesser gemäß Figur 1 liegt auf einem Substrat 1, beispielsweise Aluminiumoxyd (Al₂O₃) eine keramische Schicht 2 auf. Diese Schicht 2 bildet über dem Substrat 1 durch eine Aufwölbung 3 eine Blase 4. Innerhalb dieser Blase 4 befindet sich auf der Oberfläche 5 des Substrates 1 ein Schichtwiderstand 6, durch den die Temperatur T1 des Substrates 1 gemessen werden kann. In einem Ausführungsbeispiel der Erfindung befindet sich dieser Schichtwiderstand 6 direkt auf der Oberfläche 5 des Substrates. In dem bevorzugten und in Figur 1 gezeigten Ausführungsbeispiel ist unterhalb des Schichtwiderstandes 6 noch eine Schutzheizfläche 7 mit der Möglichkeit der Regelung dieser Heizfläche auf eine Temperatur T2 angeordnet. Die Messung der Temperatur T2 kann auch durch Ermittlung des Widerstandes der Schutzheizfläche 7 erfolgen. In diesem Fall kann auf den Schichtwiderstand 6 verzichtet werden.

Als aktiver Sensorbereich für die thermische Luftmengenmessung befindet sich auf der Kuppel der Aufwölbung 3 ein Sensorwiderstand 8, welcher beispielsweise nach dem CTA-Verfahren (Konstanttemperacuranaemometer) arbeitet. Die an dem Sensor 8 vorbeiströmende Luft ist durch den Hauptpfeil 9 gekennzeichnet.

Die entsprechenden Wärmeströme sind mit einfachen Pfeilen gekennzeichnet. Der Pfeil 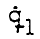 bezeichnet den Wärmestrom vom Sensorbereich an die Luft. Durch den Pfeil 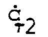 erfolgt die Kennzeichnung des Wärmestroms durch die Aufwölbung 3. Innerhalb der Blase 4 erfolgt ein Wärmestrom in Richtung 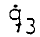 , während der Wärmestrom innerhalb der Schicht der Aufwölbung 3 durch 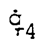 gekennzeichnet ist.

Erfindungsgemäß wird der Wärmestrom 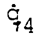 durch weitere Schichtwiderstände 10, 11 gemessen, welche um den Sensor 8 angeordnet sind. Ferner sind schematisch weitere Schutzheizflächen 12 um den Sensor 8 angedeutet, welche diesen umgeben und auf eine konstante Differenz zur Sensortemperatur geheizt werden können. In diesem Fall kann die Messung der Temperatur der Schutzheizflächen 12 ebenfalls über die Ermittlung deren Widerstandswertes erfolgen, so daß dann wahlweise auf die Schichtwiderstände 10,11 zur Temperaturmessung verzichtet werden kann.

Durch diesen erfindungsgemäßen Heißfilm-Luftmengenmesser sind folgende Meß- bzw. Auswerte-Verfahren möglich:

Der Sensor 8 arbeitet nach dem CTA-Verfahren, er ermittelt die Massenströmungsgeschwindigkeit der vorbeistreifenden Luft, wozu er auf eine gesteuerte Übertemperatur T1 relativ zur Luft direkt oder indirekt aufgeheizt wird. Ferner wird der Wärmestrom 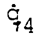 , d. h. die Temperatur der Aufwölbung durch die Schichtwiderstände 10 und 11 ermittelt. Die Temperatur des Substrates 1, welche von dem Wärmestrom 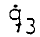 beeinflußt wird, wird von dem Schichtwiderstand 6 ermittelt. Durch die Messung der vertikalen bzw. lateralen Wärmeströme 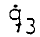 und 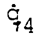 ist es möglich, Signale zu gewinnen, die als Korrektur zum Signal des durch den Sensor 8 nach dem CTA-Verfahren ermittelten Signals benützt werden können, da sie direkt ein Maß für die Fehler dieses Verfahrens darstellen. Die Korrektur kann z. B. durch eine Schaltung zur analogen Differenzbildung oder bei digitaler Auswertung durch geeignete Programmierung durchgeführt werden. In einem weiteren Ausführungsbeispiel der Erfindung mit den genannten Schutzheizflächen ist es möglich, die Wärmeströme 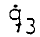 und 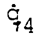 durch Regelung zu stabilisieren und damit unwirksam zu machen. Dies bedeutet, daß die Schutzheizfläche 7 unterhalb des Sensors 8 an der Substratoberseite 5 auf eine Temperatur T2 aufgeheizt wird, die eine konstante Differenz zu einer Sensortemperatur T1 haben soll. Hierdurch wird das vertikale Guardprinzip verwirklicht.

Durch die seitlich neben dem Sensor 8 angeordnete Schutzheizflächen 12 wird dieser Aufwölbungsbereich 3 auf eine konstante Differenz zur Sensortemperatur T1 aufgeheizt, so daß hier das laterale Guardprinzip verwirklicht wird. Im Rahmen der vorliegenden Erfindung soll auch eine Kombination der einzelnen Maßnahmen sowie die Erfassung frt Temperatur der Schutzheizflächen durch Ermittlung der jeweiligen Schichtwiderstände möglich sein.

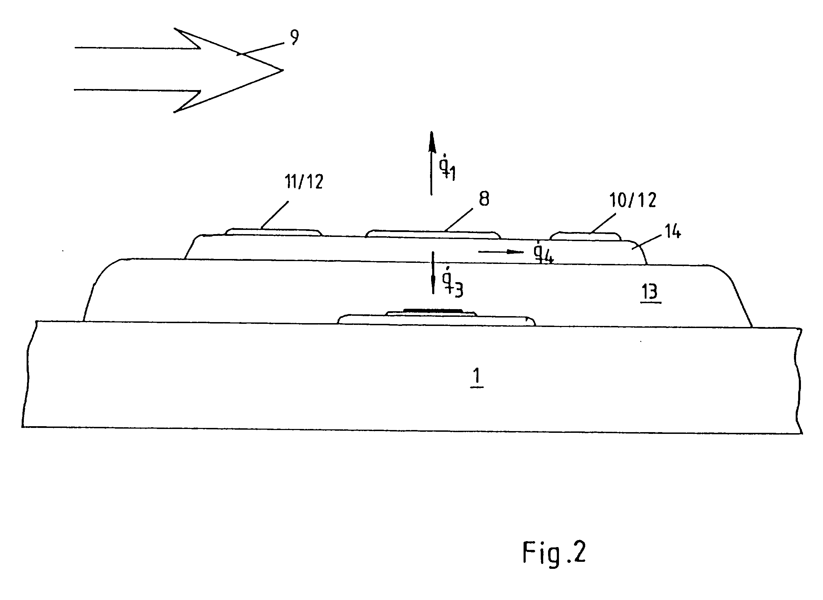

Entsprechend Figur 2 liegt bei dem dort gezeigten Heißfilm-Luftmengenmesser auf einem Substrat 1, ebenfalls bevorzugt wieder aus Al₂O₃, eine wärmeisolierende Schicht 13, beispielsweise aus poröser Keramik. Diese Schicht 13 überdeckt direkt den Heiz- und/oder Meßwiderstand 6/7, so daß hier keine Blase gebildet ist.

Auf der isolierenden Schicht 13 liegt ein Unterglas 14 als Sensorträger auf, wobei hier wiederum der Sensor 8 mittig angeordnet ist. Beidseits des Sensors 8 sind entsprechende Heiz- und/oder Meßwiderstände 10/12 bzw. 11/12 vorgesehen, über welche sowohl eine Messung des lateralen Wärmestromes 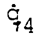 als auch eine Aufheizung des Unterglases erfolgen kann. Der Wärmestrom 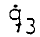 wird durch den Heiz- und/oder Meßwiderstand 6/7 ermittelt und ggfs. ausgeglichen.

## Patentansprüche

1. Vorrichtung zur Messung von Luftmengen, beispielsweise in Ansaugrohren von Kraftfahrzeugen, mit einer Anordnung, die ein Substrat (1) eine darauf angeordnete wärmeisolierenden Schicht (2, 13), sowie einen Sensor (8) und zusätzliche Meß- und/oder Heizwiderstände aufweist, und welche einen durch die zu messende Luftmenge beeinflußten Wärmestrom einschließlich eines Verlustwärmestroms, das heißt die an das Substrat bzw. die wärmeisolierende Schicht abgegebene Wärmeleistung, erfaßt, wobei die Erfassung des Verlustwärmestroms zur Korrektur des Meßergebnisses dient, der Sensor (8) auf der wärmeisolierenden Schicht (2, 13) über dem Substrat (1) angeordnet ist, auf dem Substrat (1) unter der wärmeisolierenden Schicht und vertikal unterhalb des Sensors (8) ein Meß- und/oder Heizwiderstand (6, 7) zur Ermittlung des vertikalen Verlustwärmestromes (93) sowie seitlich des Sensors (8) auf der wärmeisolierenden Schicht (2, 13) wenigstens ein weiterer Meß- und/oder Heizwiderstand (10, 11, 12) zur Ermittlung des lateralen Verlustwärmestromes (94) sitzen, wobei die Signale beider zusätzlicher Meß- und/oder Heizwiderstände zur Korrektur des Signals des Sensors (8) verwendbar sind.

2. Luftmengenmesser nach Anspruch 1, dadurch gekennzeichnet, daß auf der isolierenden Schicht (13) eine Unterglasschicht (14) liegt, welche den Sensor (8) und den oder die ihn umgebenden Korrektursensoren (10, 11, 12) trägt.

3. Luftmengensensor nach Anspruch 1 oder 2, dadurch gekennzeichnet, daß die isolierende Schicht (3, 13) aus poröser Keramik besteht.

4. Verfahren zur Messung von Luftmengen, beispielsweise in Ansaugrohren von Kraftfahrzeugen, unter Verwendung einer Vorrichtung nach einem der vorhergehenden Ansprüchen, wobei ein durch die zu messende Luftmenge (9) beeinflußter Wärmestrom einschließlich eines Verlustwärmestromes, das heißt der an ein Substrat (1) bzw. eine wärmeisolierende Schicht (2, 13) abgegebene Wärmeleistung, erfaßt wird zur Korrektur des Meßergebnisses, und wobei der laterale Wärmestrom (94) neben dem Sensor (8) stabil gehalten wird, indem dieser Bereich (12) auf eine konstante Temperaturdifferenz zur Sensortemperatur aufgeheizt und die notwendige Heizleistung als Korrektursignal erfaßt wird.

## Claims

1. Device for measuring air quantities, for example in intake pipes of motor vehicles, with an arrangement which has a substrate (1), a thermally insulating layer (2, 13) arranged on the latter, a sensor (8) and additional measuring and/or heating resistors, and which detects a heat flow influenced by the air quantity to be measured, including a lost heat flow, i.e. the heat output to the substrate or the thermally insulating layer, the detection of the lost heat flow being used to correct the measurement result, the sensor (8) being arranged on the thermally insulating layer (2, 13) above the substrate (1), a measuring and/or heating resistor (6, 7) for determining the vertical lost heat flow (93) being seated on the substrate (1) underneath the thermally insulating layer and vertically below the sensor (8), and at least one further measuring and/or heating resistor (10, 11, 12) for determining the lateral lost heat flow (94) being seated to the side of the sensor (8), on the thermally insulating layer (2, 13), the signals of both additional measuring and/or heating resistors being usable for correcting the signal of the sensor (8).

2. Air flow meter according to Claim 1, characterized in that on the insulating layer (13) there is an underglass layer (14) which carries the sensor (8) and the correction sensor or sensors (10, 11, 12) surrounding the latter.

3. Air flow sensor according to Claim 1 or 2, characterized in that the insulating layer (3, 13) is composed of porous ceramic.

4. Method for measuring air quantities, for example in intake pipes of motor vehicles, using a device according to one of the preceding claims, a heat flow influenced by the air quantity (9) to be measured, including a lost heat flow, i.e. the heat output to a substrate (1) or a thermally insulating layer (2, 13), being detected to correct the measurement result, and the lateral heat flow (94) next to the sensor (8) being kept stable by heating this region (12) to a constant temperature difference relative to the sensor temperature and detecting the necessary heat output as a correction signal.

## Revendications

1. Dispositif de mesure de débits d'air, par exemple dans des tubulures d'aspiration de véhicules automobiles, ayant un dispositif, qui comprend un substrat (1), une couche thermo-isolante (2, 13) placée dessus, ainsi qu'un détecteur (8) et des résistances additionnelles de mesure et de chauffage, et qui détecte un courant de chaleur y compris un courant de perte de chaleur influencés par la quantité d'air à mesurer, c'est-à-dire la puissance thermique cédée au substrat ou à la couche thermo-isolante, tandis que la détection du courant de chaleur perdue sert à la correction du résultat de mesure, le détecteur (8) est disposé sur la couche thermo-isolante (2, 13) au-dessus du substrat (1), sur le substrat (1) en dessous de la couche thermo-isolante et à la verticale en dessous du détecteur (8) se situent une résistance (6, 7) de mesure et/ou de chauffage pour déterminer le courant de perte de chaleur vertical ( 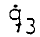 ) ainsi que latéralement au détecteur (8) sur la couche thermo-isolante (2, 13) au moins une autre résistance de mesure et/ou de chauffage (10, 11, 12) pour déterminer le courant de perte de chaleur ( 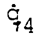 ), tandis que les signaux des deux résistances additionnelles de mesure et/ou de chauffage sont utilisables pour la correction du signal du capteur (8).

2. Débitmètre d'air selon la revendication 1,
caractérisé en ce que
sur la couche isolante (13) se trouve une couche de sous-verre (14), qui porte le détecteur (8) et le ou les détecteurs (10, 11, 12) l'entourant.

3. Débitmètre d'air selon la revendication 1 ou 2,
caractérisé en ce que
la couche isolante (3, 13) est composée de céramique poreuse.

4. Procédé de mesure de débits d'air, par exemple dans des tubulures d'aspiration de véhicules automobiles, en utilisant un dispositif selon une des revendications précédentes, procédé dans lequel on détecte pour la correction du résultat de mesure un courant de chaleur y compris un courant de perte de chaleur influencée par le débit d'air à mesurer (9), c'est-à-dire la puissance thermique cédée à un substrat (1) ou à une couche thermo-isolante (2, 13), et dans lequel le courant de chaleur latéral ( q̇₄) près du détecteur (8) est maintenu stable, en chauffant cette zone (12) à une différence de température constante par rapport à la température du détecteur et en détectant la puissance de chauffage nécessaire comme signal de correction.
